# FASCICULE DE BREVET EUROPEEN

(11) **EP 4 359 289 B1**
(45) Date de publication et mention de la délivrance du brevet: **25.06.2025**
(21) Numéro de dépôt: 22727964.3
(22) Date de dépôt: 03.05.2022
(51) Int. Cl.: B62D 25/20, B60K 1/04

(54) **CAISSE DE VÈHICULE COMPORTANT UN SOUBASSEMENT RENFORCÉ**
FAHRZEUGKAROSSERIE MIT VERSTÄRKTEM UNTERGESTELL
VEHICLE BODY HAVING A REINFORCED UNDERFRAME

(30) Priorité: 21.06.2021 FR 2106547
(43) Date de publication de la demande: 01.05.2024
(73) Titulaire: Stellantis Auto SAS, 78300 Poissy (FR)
(72) Inventeur: JAUMONT, Patrick, 94400 VITRY SUR SEINE (FR)
(74) Mandataire: BCIP
(86) Numéro de dépôt international: PCT/FR2022/050850
(87) Numéro de publication internationale: WO 2022/269148

(56) Documents cités:
- WO-A1-2013/053433

## Description

La présente invention revendique la priorité de la demande française 2106547 déposée le 21 juin 2021.

L'invention concerne une caisse de véhicule avec un soubassement renforcé au niveau d'un plancher et de supports de siège, ainsi qu'un véhicule comportant une telle caisse.

Il est connu de placer une batterie sous un siège d'un passager d'un véhicule, notamment sous le siège d'un passager avant, reposant sur le plancher du véhicule ou fixer à un élément du plancher. Par exemple, le document DE102019203045 décrit un véhicule comportant un plancher s'étendant entre un tunnel central et un longeron latéral, orientés tous les deux longitudinalement au véhicule. Le tunnel central s'étend dans l'axe médian du véhicule et le longeron le long d'un bord latéral. Deux traverses parallèles s'étendent sur le plancher, du longeron au tunnel, et comportent des zones de fixation sur lequel est fixé un siège. Le siège s'étend au-dessus de l'espace entre les deux traverses. Une batterie est installée dans cette espace entre les deux traverses, portée par un support fixé sur lesdites traverses, et plus particulièrement sur la face des traverses en vis-à-vis du siège. Cette solution permet une protection de la batterie en cas de choc latérale, tout en assurant la déformation du côté latérale du véhicule au cours du choc pour absorber l'énergie du choc et ainsi protéger les occupant.

Le document WO2013053433 décrit une caisse de véhicule selon le préambule de la revendication indépendante 1, avec un soubassement, le soubassement comprenant avec un tunnel central et un longeron latéral s'étendant tous les deux dans une direction longitudinal à la caisse du véhicule, et des supports de sièges s'étendant longitudinalement, l'un le long du tunnel et l'autre le long du longeron.

L'inconvénient d'une telle solution est qu'elle nécessite d'installer deux traverses sous le siège, orientées transversalement au véhicule, qui réduisent l'espace sous le siège et augmentent la masse du véhicule. De plus, elle nécessite de créer un support spécifique de batterie, complexe, pour protéger la batterie en faisant en sorte qu'elle ne repose pas sur le plancher. Un autre inconvénient est que la batterie n'est accessible qu'en démontant le siège.

L'objectif de l'invention est de remédier à ces inconvénients. En particulier, un des buts de l'invention est de proposer un véhicule avec une batterie sous un siège, de masse réduite, de conception simple à réaliser, tout en assurant une protection efficace de la batterie et du passage assis sur le siège en cas de choc latéral.

Ce but est atteint selon l'invention, grâce à une caisse de véhicule comportant un soubassement qui comprend un tunnel central, un longeron latéral s'étendant tous les deux dans une direction longitudinal à la caisse, et un plancher comportant une face intérieure orientée vers l'intérieur de la caisse, le plancher s'étendant entre le tunnel central et le longeron, le soubassement comprenant en outre un premier support de siège s'étendant longitudinalement le long du tunnel et de la face intérieure du plancher, fixé audit tunnel et audit plancher, un deuxième support de siège s'étendant longitudinalement le long du longeron et de la face intérieure du plancher, fixé audit longeron et audit plancher, en vis-à-vis du premier support, lesdits premier et deuxième supports comportant chacun une face supérieure distante de la face intérieure du plancher, de sorte que les premier et deuxième supports sont en saillie par rapport à la face intérieure du plancher, les faces supérieures comportant des interfaces de fixation pour la fixation d'un siège, remarquable en ce qu'une traverse de renfort s'étend entre les deux supports, à distance du plancher, fixée par chacune de ses extrémités à chacun des supports.

Ainsi avantageusement, la caisse offre une protection efficace pour un système tel qu'un bac de batterie comportant une batterie, installé au moins en partie entre les deux supports, sous la traverse de renfort, tout en conservant de l'espace entre les supports. En cas de choc latérale, la traverse de renfort vient réduire le rapprochement entre les deux supports, et réduire les risques d'écrasement du système. Cette solution est en outre simple à réaliser, notamment en réduisant le nombre et la masse de pièces à fixer sur la caisse du véhicule. Elle permet de plus de réduire les modifications à faire sur une caisse de véhicule existante, qui comporte déjà des supports, pour accueillir un tel système entre les supports du siège. Un autre avantage est que le système reste accessible lorsqu'un siège est fixé aux supports.

Dans un mode de réalisation préféré de l'invention, les interfaces de fixation de siège sont situées sur chacune des extrémités des faces supérieures des supports orientées du même côté de la caisse, et la traverse de renfort est fixée aux supports par lesdites interfaces de fixation situées sur chacune des extrémités des supports orientées du même côté de la caisse. De préférence, la traverse de renfort est fixée sur les interfaces de fixation situées sur les extrémités des supports situées vers l'avant de la caisse, l'avant de la caisse correspondant à l'avant d'un véhicule comportant une telle caisse.

Dans un autre mode de réalisation de l'invention, la traverse de renfort est agencée de sorte à fléchir en direction opposée du plancher en cas d'effort transversal orienté d'une extrémité vers l'autre de la traverse de renfort.

Ainsi avantageusement, en cas de choc latérale, la traverse de renfort se déforme et fléchit en direction opposée au plancher, de sorte à ne pas appuyer sur un système, comme par exemple une batterie, installée entre ladite traverse de renfort et le plancher, réduisant les risques de détériorer le système.

Dans un mode de réalisation préféré de l'invention, la traverse de renfort comporte un corps sensiblement rectiligne et des moyens de fixation à chacune des extrémités du corps, les moyens de fixation étant décalés vers le plancher par rapport au corps de la traverse de renfort.

Ainsi avantageusement, en cas de choc latéral, l'effort injecté dans le corps de la traverse de renfort par les moyens de fixation favorise le fléchissement de la traverse de renfort.

Dans un autre mode de réalisation de l'invention, le soubassement comprend une traverse d'assise s'étendant du premier support au deuxième support, reliée à une de ces extrémités au premier support entre les interfaces de fixation situées sur le premier support, suivant la direction longitudinale, et à son autre extrémité au deuxième support entre les interfaces de fixation situées sur le deuxième support, suivant la direction longitudinale, la traverse d'assise étant fixée au plancher.

Ainsi avantageusement, en cas de choc latéral, la traverse d'assise limite le rapprochement du deuxième support vers le premier support, réduisant les risques de dégradation sur le système installé sous la traverse de renfort et améliorant la sécurité d'un passage installé sur un siège fixé aux supports.

Dans un autre mode de réalisation de l'invention, le soubassement comporte une plaque de renfort sur la face intérieure du plancher, fixée audit plancher, s'étendant au moins en partie entre les supports et en vis-à-vis de la traverse de renfort. Dans une variante, la plaque de renfort comporte une ou plusieurs zones de fixation pour un bac de batterie de sorte à maintenir ledit bac de batterie sur le plaque de renfort.

Ainsi avantageusement, la plaque de renfort renforce le plancher entre les supports, et réduit les risques de déformation de celui-ci en cas de choc latérale, de sorte à limiter le rapprochement entre les deux supports, et réduisant de fait les risques de dégradation d'un système installé entre lesdits supports.

Dans un autre mode de réalisation préféré de l'invention, la plaque de renfort comporte un relief en saillie du côté opposé du plancher, le long du bord avant de ladite plaque de renfort orienté vers l'avant de la caisse. Dans une variante, le relief s'étend dans une direction transversale à la caisse.

Ainsi avantageusement, le relief permet de faire une bordure sur laquelle bloque un système, tel qu'un bac de batterie placé sur la plaque de renfort, en cas de choc avant.

Dans un autre mode de réalisation de l'invention, le soubassement comporte une plaque de protection disposée en vis-à-vis de la face extérieure du plancher et fixée au soubassement, la face extérieure étant la face du plancher opposée à la face intérieure.

Dans un autre mode de réalisation de l'invention, le soubassement comporte du côté extérieur de la caisse, une prolonge de brancard s'étendant longitudinalement sur la face extérieure du plancher, et un renfort de tunnel disposé à la jonction entre le tunnel et le plancher de sorte à renforcer cette jonction, la plaque de protection étant fixée par un de ces bords à la prolonge de brancard et par un bord opposé au renfort de tunnel, au moins en partie vis-à-vis de la plaque de renfort.

Ainsi avantageusement, la plaque de protection forme un écran sous le plancher évitant qu'un objet traverse le plancher et vienne dégrader un système installé sur la plaque de renfort, comme par exemple une batterie. De plus, elle rigidifie le plancher vis-à-vis des efforts selon la direction transversale, réduisant les risques de rapprochement du deuxième support vers le premier support en cas de choc latéral.

L'invention porte également sur un véhicule comportant une caisse suivant tel que décrit précédemment, et un bac batterie disposé au moins en partie entre les supports et sous la traverse de renfort.

L'invention sera mieux comprise à la lecture de la description qui va suivre, donnée uniquement à titre d'exemple et faite en se référant aux dessins annexés, sur lesquels :
[Fig.1] représente une vue en perspective d'un soubassement d'une caisse de véhicule selon l'invention, vue de l'intérieur du véhicule, avec une partie du plancher en transparent.
[Fig.2] représente une vue en perspective du soubassement de la figure 1 vue depuis l'extérieur du véhicule, par le dessous du véhicule.

Les dessins sont des représentations schématiques pour faciliter la compréhension de l'invention. Les composants ne sont pas forcément représentés à l'échelle. Les mêmes références correspondent aux mêmes composants d'une figure à l'autre.

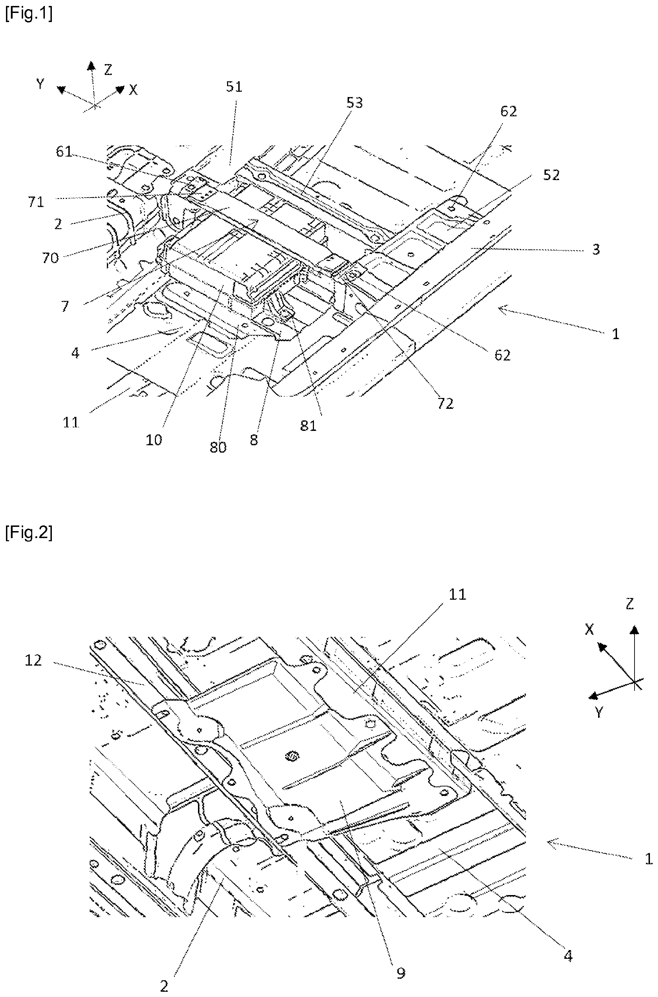

La figure 1 montre un soubassement 1 d'une caisse de véhicule automobile, du côté intérieur du véhicule, qui comprend un tunnel central 2 et un longeron latéral 3 s'étendant tous les deux dans une direction longitudinal X à la caisse, et un plancher 4 s'étendant entre le tunnel central 2 et le longeron 3. L'axe X représente la direction longitudinale du véhicule, l'axe Y la direction transversale et l'axe Z la direction verticale. Les directions avant, arrière, haut, bas sont prises dans le référentiel du véhicule comportant la caisse. Le plancher 4 s'étend sensiblement parallèlement aux axes longitudinal X et transversal Y.

Le soubassement 1 comprend un premier support 51 de siège s'étendant longitudinalement le long du tunnel 2 et du plancher 4, fixé audit tunnel 2 et audit plancher 4, ainsi qu'un deuxième support 52 de siège s'étendant longitudinalement le long du longeron 3 et du plancher 4, fixé audit longeron 3 et audit plancher 4, en vis-à-vis du premier support 51 suivant l'axe transversal Y. Les deux supports 51 sont distants l'un de l'autre suivant cet axe transversal Y du véhicule. Les premier 51 et deuxième 52 supports comportent chacun une face supérieure distante d'une face intérieure du plancher 4, la face intérieure étant la face du plancher orientée vers du côté intérieur de la caisse. Autrement dit, les premier 51 et deuxième 52 supports sont en saillie par rapport à la face intérieure du plancher 4, en hauteur par rapport au plancher. Les faces supérieures comportent des interfaces de fixation 61, 62 pour un siège.

Une traverse de renfort 7 s'étend entre les deux supports 51, 52, à distance du plancher 4. Elle est fixée par chacune de ses extrémités à la face supérieur de chacun des supports 51, 52. C'est-à-dire qu'un espace existe entre la traverse de renfort 7 et le plancher 4. La traverse de renfort 7 s'étend sensiblement parallèlement à la direction transversale Y.

Les interfaces de fixation 61, 62 de siège sont situées sur chacune des extrémités des faces supérieures des supports 51, 52 orientées du même côté de la caisse 1. C'est-à-dire que le premier support 51 comporte deux interfaces de fixation 61, disposées chacune à chaque extrémité dudit premier support 51, sur la face supérieure dudit premier support 51, et le deuxième support 52 comporte deux interfaces de fixation 62, disposées aussi à chacune à chaque extrémité du deuxième support 52, sur la face supérieure dudit support 52.

Sur le mode de réalisation de la figure 1, la traverse de renfort 7 est fixée aux supports 51, 52 avec lesdites interfaces de fixation 61, 62 situées sur chacune des extrémités des supports 51, 52 orientée vers l'avant de la caisse, l'avant de la caisse correspondant à l'avant du véhicule. C'est-à-dire que la traverse de renfort 7 s'étend entre les deux extrémités des premier et deuxième renforts 51 et 52 qui sont orientées du côté de l'avant du véhicule. Ces interfaces de fixation 61, 62 disposées à ces extrémités avant desdits supports 51, 52 sont donc utilisées pour fixer à la fois le siège et la traverse de renfort 7.

La traverse de renfort 7 est par exemple agencée de sorte à fléchir en direction opposée du plancher 4 en cas d'effort transversal, c'est-à-dire selon la direction transversale Y, orienté d'une extrémité vers l'autre de la traverse de renfort 7. Elle comporte par exemple une résistance mécanique inférieure du côté de sa face orientée vers le plancher 4 que sur celle orientée à l'opposé du plancher 4. Dans une variante, la traverse de renfort 7 est par exemple réalisée par un profilé tubulaire aplati, comportant une première paroi et une seconde paroi parallèles entre-elle, s'étendant sensiblement suivant les axes X et Y, la première paroi s'étendant au-dessus et en vis-à-vis de la seconde paroi, avec la seconde paroi en vis-à-vis du plancher 4 ; l'épaisseur de la seconde paroi est par exemple choisie inférieure à l'épaisseur de la première paroi pour obtenir le fléchissement voulu, à l'opposé du plancher 4 lorsqu'un effort est appliqué sur la traverse de renfort 7, orientée d'une extrémité à l'autre de ladite traverse de renfort 7.

Dans une autre variante, la traverse de renfort 7 comporte un corps 70 sensiblement rectiligne et des moyens de fixation 71, 72 à chacune des extrémités du corps 70 ; les moyens de fixation 71, 72 sont décalés vers le plancher 4 par rapport au corps 70 de la traverse de renfort 7, c'est-à-dire suivant la direction verticale Z. Ce décalage favorise le fléchissement de la traverse de renfort 7 lorsqu'un effort orientée d'une extrémité à l'autre de ladite traverse de renfort 7 est appliqué sur ladite traverse de renfort 7, par exemple en cas de choc latéral.

Dans le mode de réalisation de la figure 1, une traverse d'assise 53 s'étend du premier support 51 au deuxième support 52. Elle est reliée à une de ces extrémités au premier support 51, entre les interfaces de fixation 61 situé sur ledit premier support 51 selon la direction longitudinale X, et à son autre extrémité au deuxième support 52 entre les interfaces de fixation 62 situé sur ledit deuxième support 52 selon la direction longitudinale X. La traverse d'assise 53 est par exemple fixée au plancher 4, et s'étend sur toute la hauteur des supports 51, 52, la hauteur étant la dimension suivant la direction verticale Z, c'est-à-dire que la traverse d'assise 53 comporte une face supérieure qui est sensiblement alignée avec les faces supérieures des supports 51, 52. D'autres hauteurs pour la traverse d'assise 53 peuvent être choisies.

La traverse d'assise 53 est en appui sur des parois latérales des supports 51, 52, les parois latérales respectives des supports 51, 52 étant les parois s'étendant entre la face supérieure de chacune des supports 51, 52 et le plancher 4, délimitant l'espace entre les deux supports 51, 52. La paroi latérale du premier support 51 est donc en vis-à-vis de la paroi latérale du deuxième support 52. Dans le mode de réalisation de la figure 1, la jonction entre la traverse d'assise 53 et chacun des deux supports 51, 52 est sensiblement au milieu de la longueur desdits supports 51, 52, la longueur étant la dimension prise dans le sens longitudinal X. L'homme du métier envisagera d'autres positions de la traverse d'assise 53 entre les supports 51, 52, par exemple en fonction de contraintes d'architecture.

Une plaque de renfort 8 est disposée sur la face intérieure du plancher 4. Elle s'étend au moins en partie entre les supports 51, 52 et en vis-à-vis de la traverse de renfort 7. Elle est fixée au plancher 4 et comporte une ou plusieurs zones de fixation 81 pour fixer un bac de batterie 10. Le bac de batterie 10 est positionné sur la plaque de renfort 8. La plaque de renfort 8 peut s'étendre en dehors de l'espace entre les supports 51, 52. Par exemple, comme illustré en figure 1, la plaque de renfort 8 s'étend vers l'avant du véhicule suivant l'axe longitudinal X, depuis la traverse d'assis 53 et au-delà des extrémités avant des supports 51, 52. Elle comporte donc une partie en vis-à-vis de la traverse de renfort 7. La surface de la plaque de renfort 10 couvre au moins l'emprise du bac de batterie dans le plan parallèle aux axes X et Y, de manière à recevoir l'ensemble du bac de batterie 10, la plaque de renfort 4 s'étendant sensiblement parallèlement aux axes X et Y.

Dans le mode de réalisation représentée en figure 1, la plaque de renfort 8 comporte un relief 80 en saillie du côté opposé du plancher 4, le long du bord avant de ladite plaque de renfort 8 orienté vers l'avant de la caisse. Dans cet exemple, le relief 80 s'étend parallèlement à la direction transversale Y, le long du bord avant de ladite plaque de renfort 8, sur plus de la moitié de la largeur de la plaque de renfort 8 au niveau de son bord avant, la largeur correspondant à la dimension suivant l'axe transversal Y. Le bac de batterie 10 installé sur la plaque de renfort 8 est mis en butée ou à proximité du relief 80, par exemple à moins de 1 centimètre du relief, en arrière du relief 80 selon la direction longitudinale X, de sorte à retenir un mouvement vers l'avant du véhicule dudit bac de batterie 10 en cas de choc avant.

La plaque de renfort 8 est par exemple réalisée dans une tôle emboutie, et le relief 80 obtenu par déformation de la tôle forme un creux sur la face de ladite plaque de renfort 8 faisant face au plancher 4. Dans une variante non illustrée, pour renforcer la plaque de renfort 8 au niveau le relief 80, une pièce de renfort est installée dans le creux formant le relief 80, par exemple fixée par collage ou soudage à ladite plaque de renfort 8. Dans une autre variante, le relief 80 peut être réalisé directement par une pièce fixée sur la plaque de renfort 8, du côté de la plaque de renfort 8 opposée au plancher 4 et agencée de manière à créer le relief 8.

En variante, la plaque de renfort 8 peut comporter plusieurs reliefs 80 disposés le long de son bord avant.

Pour augmenter la rigidité de la plaque de renfort 8, en particulier vis à vis des efforts en cas de choc latéral, celle-ci peut comporter des nervures de raidissement s'étendant parallèlement à l'axe transversal Y.

Afin de fixer le bac de batterie 10 au soubassement 1, la plaque de renfort 8 comporte une ou plusieurs zones de fixation 81. Par exemple, il peut comporter une zone de fixation avant 81 sur une partie avant de la plaque de renfort 8, en arrière du relief 80, et une zone de fixation arrière disposé en partie arrière de la plaque de renfort 8. La partie avant correspond à la partie de la plaque de renfort 8 disposée en avant de la traverse de renfort 7 et la partie arrière la partie en arrière de ladite traverse de renfort 7, suivant l'axe longitudinal X.

Dans le mode de réalisation illustré en illustré en figure 2, le soubassement 1 comporte une plaque de protection 9 disposée en vis-à-vis de la face extérieure du plancher 4 et fixée au soubassement 1, la face extérieure étant la face du plancher 4 opposée à la face intérieure. La face extérieure du plancher 4 est donc située du côté l'extérieur de la caisse. La plaque de protection 9 est donc du côté de la face extérieure du plancher 4, à l'extérieur de la caisse. Par exemple, le soubassement 1 comporte du côté extérieur, c'est-à-dire du côté de la face extérieure du plancher 4, une prolonge de brancard 11, s'étendant longitudinalement sur la face extérieure du plancher 4, et un renfort de tunnel 12 disposé à la jonction entre le tunnel 2 et le plancher 4. Le renfort de tunnel 12 permet de renforcer la jonction entre le tunnel 2 et le plancher 4. La prolonge de brancard 11 est par exemple un élément de structure du soubassement 1 disposé dans le prolongement d'un brancard avant, en saillie par rapport à la face extérieure du plancher 4. La plaque de protection 9 est fixée par un de ces bords à la prolonge de brancard 11 et par un bord opposé au renfort de tunnel 12, au moins en partie vis-à-vis de la plaque de renfort 8. Dans le mode de réalisation de la figure 2, la prolonge de brancard 11 comporte deux faces latérales s'étendant suivant l'axe vertical Z et longitudinal X, et une face inférieure reliant les faces latérales, s'étendant suivant l'axe longitudinal X et l'axe transversal Y, et distante du plancher 4, la plaque de protection 9 étant fixée sur cette face inférieure. La plaque de protection 9 est dans cette variante agencée de sorte à être à distance du plancher 4 dans la direction verticale Z, à la même distance que la face supérieure de la prolonge de brancard 11, sauf au niveau de son bord fixé au renfort de tunnel 12. En variante, la plaque de protection 9 peut être plus proche du plancher 4, ou encore en appui contre la face extérieure du plancher 4.

Comme illustré en figure 1, dans laquelle la prolonge de brancard 11 est visible par illustration en transparence d'une partie du plancher 4, la prolonge de brancard 11 s'étend par exemple en vis-à-vis de l'espace entre les supports de sièges 51, 52.

Le plancher 4 est par exemple un plancher 4 avant de véhicule, et les supports 51, 52 sont des supports de siège avant, tel que le siège conducteur ou le siège passage.

Un véhicule comportant la caisse avec le soubassement 1 est par exemple un véhicule hybride, comportant un moteur thermique et un moteur électrique de propulsion, dont la batterie alimentant le moteur électrique est disposée dans le bac de batterie 10. Le bac de batterie 10 est disposé au moins en partie entre les supports 51, 52 et sous la traverse de renfort 7, entre ladite traverse de renfort 7 et le plancher 4. Un siège est fixé sur les interfaces de fixation 61, 62 disposés sur les supports 51, 52. Dans le cas où le soubassement 1 comporte une plaque de renfort 8, le bac de batterie 10 est disposé sur la plaque de renfort 8. Dans la variante présentant une plaque de protection 9, celle-ci s'étend au moins en vis du bac de batterie 10.

D'autres variantes de réalisation peuvent être envisagées. Par exemple, la traverse de renfort 7 peut être fixée au niveau des extrémités arrière des support 51, 52. En autre variante, la traverse de renfort 7 peut être fixée sur les parois latérales des supports 51, 52, sans utilisés les interfaces de fixation 61, 62.

## Revendications

1. Caisse de véhicule comportant un soubassement (1) qui comprend un tunnel central (2), un longeron latéral (3) s'étendant tous les deux dans une direction longitudinal (X) à la caisse, et un plancher (4) comportant une face intérieure orientée vers l'intérieur de la caisse, le plancher (4) s'étendant entre le tunnel central (2) et le longeron (3), le soubassement (1) comprenant en outre un premier support (51) de siège s'étendant longitudinalement le long du tunnel (2) et de la face intérieure du plancher (4), fixé audit tunnel (2) et audit plancher (4), un deuxième support (52) de siège s'étendant longitudinalement le long du longeron (3) et de la face intérieure du plancher (4), fixé audit longeron (3) et audit plancher (4), en vis-à-vis du premier support (51), lesdits premier et deuxième supports (51, 52) comportant chacun une face supérieure distante de la face intérieure du plancher (4), de sorte que les premier et deuxième supports (51, 52) sont en saillie par rapport à la face intérieure du plancher (4), les faces supérieures comportant des interfaces de fixation (61, 62) pour la fixation d'un siège, la caisse étant **caractérisée en ce qu'**une traverse de renfort (7) s'étend entre les deux supports (51, 52), à distance du plancher (4), fixée par chacune de ses extrémités à chacun des supports (51, 52).

2. Caisse suivant la revendication 1, dont les interfaces de fixation (61, 62) de siège sont situées sur chacune des extrémités des faces supérieurs des supports (51, 52) orientées du même côté de la caisse, et la traverse de renfort (7) est fixée aux supports (51, 52), sur leur face supérieure respective, avec lesdites interfaces de fixation (61, 62) situées sur chacune des extrémités des supports (51, 52) orientée du même côté de la caisse, de préférence vers l'avant de la caisse, l'avant de la caisse correspondant à l'avant d'un véhicule comportant une telle caisse.

3. Caisse suivant l'une des revendications précédentes, dont la traverse de renfort (7) est agencée de sorte à fléchir en direction opposée du plancher (4) en cas d'effort transversal orienté d'une extrémité vers l'autre de la traverse de renfort (7).

4. Caisse suivant la revendication 3, dont la traverse de renfort (7) comporte un corps (70) sensiblement rectiligne et des moyens de fixation (71, 72) à chacune des extrémités du corps (70), les moyens de fixation (71, 72) étant décalés vers le plancher (4) par rapport au corps (70) de la traverse de renfort (7).

5. Caisse suivant l'une des revendications précédentes, dont le soubassement (1) comprend une traverse d'assise (53) s'étendant du premier support (51) au deuxième support (52), reliée à une de ces extrémités au premier support (51) entre les interfaces de fixation (61) situées sur le premier support (51), suivant la direction longitudinale (X), et à son autre extrémité au deuxième support (52) entre les interfaces de fixation (62) situées sur le deuxième support (52), suivant la direction longitudinale (X), la traverse d'assise (53) étant fixée au plancher (4).

6. Caisse suivant l'une des revendications précédentes, comportant une plaque de renfort (8) sur la face intérieure du plancher (4), fixée audit plancher (4), s'étendant au moins en partie entre les supports (51, 52) et en vis-à-vis de la traverse de renfort (7), de préférence comportant une zone de fixation (81) pour un bac de batterie (10).

7. Caisse suivant la revendication 6, dont la plaque de renfort (8) comporte un relief (80) en saillie du côté opposé du plancher (4), le long du bord avant de ladite plaque de renfort (8) orienté vers l'avant de la caisse, de préférence le relief (80) s'étendant dans une direction transversale (Y) à la caisse.

8. Caisse suivant l'une des revendications précédentes, dont le soubassement (1) comporte une plaque de protection (9) disposée en vis-à-vis de la face extérieure du plancher (4) et fixée au soubassement (1), la face extérieure étant la face du plancher opposée à la face intérieure.

9. Caisse suivant la revendication 8 et l'une des revendications 6 ou 7, dont le soubassement (1) comporte du côté extérieur de la caisse, une prolonge de brancard (11) s'étendant longitudinalement sur la face extérieure du plancher (4), et un renfort de tunnel (12) disposé à la jonction entre le tunnel (2) et le plancher (4) de sorte à renforcer cette jonction, la plaque de protection (9) étant fixée par un de ces bords à la prolonge de brancard (11) et par un bord opposé au renfort de tunnel (12), au moins en partie vis-à-vis de la plaque de renfort (8).

10. Véhicule comportant une caisse suivant l'une des revendications précédentes, et un bac batterie disposé au moins en partie entre les supports (51, 52) et sous la traverse de renfort (7).

## Patentansprüche

1. Fahrzeugkarosserie mit einem Untergestell (1), das einen Mitteltunnel (2), einen sich beide in Längsrichtung (X) zum Untergestell erstreckenden Seitenholm (3) und einen Untergestell (4) mit einer nach innen gerichteten Innenseite des Untergestells umfasst, wobei sich der Unterboden (4) zwischen dem Mitteltunnel (2) und dem Längsträger (3) erstreckt 1) ferner mit einem ersten Sitzträger (51), der sich in Längsrichtung entlang des Tunnels (2) und der Innenseite des Bodens (4) erstreckt und an dem Tunnel (2) und dem Boden (4) befestigt ist, einem zweiten Sitzträger (52), der sich in Längsrichtung entlang des Längsträgers (3) und der Innenseite des Bodens (4) erstreckt, der an dem Boden (4) befestigt ist, Gegenüber dem ersten Träger (51) weisen die ersten und zweiten Träger (51, 52) jeweils eine von der Innenseite des Bodens (4) beabstandete Oberseite auf, sodass die ersten und zweiten Träger (51, 52) von der Innenseite des Bodens (4) vorstehen, wobei die Oberseite Befestigungsflächen (61, 62) zur Befestigung eines Sitz, wobei der Kasten **dadurch gekennzeichnet ist, dass** sich zwischen den beiden Trägern (51, 52) im Abstand zum Boden (4) ein Verstärkungssteg (7) erstreckt, der mit jedem seiner Enden an jedem der Träger (51, 52) befestigt ist.

2. Kasten nach Anspruch 1, dessen Sitzbefestigungsschnittstellen (61, 62) an jedem der Enden der Oberseiten der Träger (51, 52) angeordnet sind, die auf der gleichen Seite des Kastens ausgerichtet sind, und der Verstärkungssteg (7) an den Trägern (51, 52) an ihrer jeweiligen Oberseite mit den Befestigungsschnittstellen (61, 62) befestigt ist An jedem der Enden der Träger (51, 52), die auf derselben Seite des Aufbaus, vorzugsweise nach vorn, ausgerichtet sind, entspricht die Vorderseite des Aufbaus der Vorderseite eines Fahrzeugs mit einem solchen Kasten.

3. Kasten nach einem der vorhergehenden Ansprüche, dessen Verstärkungssteg (7) so angeordnet ist, dass er bei einer von einem Ende des Verstärkungsstegs (7) zum anderen gerichteten Querkraft in entgegengesetzter Richtung zum Boden (4) abbiegt.

4. Kasten nach Anspruch 3, dessen Verstärkungssteg (7) einen im Wesentlichen geradlinigen Körper (70) und Befestigungsmittel (71, 72) an jedem Ende des Körpers (70) aufweist, wobei die Befestigungsmittel (71, 72) gegenüber dem Körper (70) des Verstärkungssteges (7) versetzt sind.

5. Kasten nach einem der vorhergehenden Ansprüche, bei dem der Unterbau (1) einen Sitzträger (53) umfasst, der sich von dem ersten Träger (51) zum zweiten Träger (52) erstreckt und mit einem dieser Enden mit dem ersten Träger (51) zwischen den Befestigungsschnittstellen (61) auf dem ersten Träger (51) in Längsrichtung (X) verbunden ist, und Das andere Ende des zweiten Trägers (52) zwischen den Befestigungsschnittstellen (62) auf dem zweiten Träger (52) in Längsrichtung (X), wobei der Sitzsteg (53) am Boden (4) befestigt ist.

6. Kasten nach einem der vorhergehenden Ansprüche mit einer Verstärkungsplatte (8) auf der Innenseite des Bodens (4), die an dem Boden (4) befestigt ist und sich zumindest teilweise zwischen den Trägern (51, 52) und der Verstärkungstraverse (7) erstreckt, vorzugsweise mit einem Befestigungsbereich (81) für einen Batteriebehälter (10).

7. Kasten nach Anspruch 6, dessen Verstärkungsplatte (8) eine Erhebung (80) aufweist, die auf der gegenüberliegenden Seite des Bodens (4) entlang des vorderen Randes der Verstärkungsplatte (8), der nach vorne gerichtet ist, vorsteht, vorzugsweise die Erhebung (80), die sich in einer Querrichtung (Y) zum Kasten erstreckt.

8. Kasten nach einem der vorhergehenden Ansprüche, bei dem der Unterbau (1) eine Schutzplatte (9) aufweist, die gegenüber der Außenseite des Bodens (4) angeordnet und am Unterbau (1) befestigt ist, wobei die Außenseite die der Innenseite gegenüberliegende Seite des Bodens ist.

9. Kasten nach Anspruch 8 und einem der Ansprüche 6 oder 7, dessen Unterbau (1) an der Außenseite des Kastens eine sich längs erstreckende Schenkelverlängerung (11) auf der Außenseite des Bodens (4) und eine Tunnelverstärkung (12) aufweist, die an der Verbindung zwischen dem Tunnel (2) und dem Boden (4) angeordnet ist, um diese Verbindung zu verstärken 9) mit einem dieser Ränder an der Trägerverlängerung (11) und mit einem der Tunnelverstärkung (12) gegenüberliegenden Rand zumindest teilweise gegenüber der Verstärkungsplatte (8) befestigt ist.

10. Fahrzeug mit einem Kasten nach einem der vorhergehenden Ansprüche und einem Batteriebehälter, der zumindest teilweise zwischen den Trägern (51, 52) und unter dem Verstärkungsträger (7) angeordnet ist.

## Claims

1. Vehicle box consisting of a base (1) that includes a central tunnel (2), a lateral longeron (3) that both extend in a longitudinal direction (X) to the body, and a floor (4) that has an inner face facing the body, the floor (4) that extends between the central tunnel (2) and the longeron (3), the base (4) 1) also comprising a first support (51) of seat extending lengthwise along the tunnel (2) and the inner face of the floor (4), fixed to the tunnel (2) and the floor (4), a second support (52) of seat extending lengthwise along the longeron (3) and the inner face of the floor (4), fixed to the longeron (3) and to the floor (4) in respect of the first bracket (51), the said first and second supports (51, 52) each having a higher face distant from the inner face of the floor (4), so that the first and second supports (51, 52) are protruding from the inner face of the floor (4), the upper faces having attachment interfaces (61, 62) for fixing a seat, the body being **characterized by** a reinforcement cross (7) extending between the two supports (51, 52), at a distance from the floor (4), fixed by each end to each of the supports (51, 52).

2. Box following Claim 1, whose seat attachment interfaces (61, 62) are located on each end of the upper faces of the supports (51, 52) oriented on the same side of the body, and the reinforcement cross (7) is attached to the supports (51, 52), on their respective upper faces, with the said fixing interfaces (61, 62) located on each end of the supports (51, 52) oriented on the same side of the box, preferably towards the front of the box, the front of the box corresponding to the front of a vehicle with such a box.

3. Box following one of the preceding claims, the reinforcement cross (7) of which is arranged so as to bend in the opposite direction of the floor (4) in the event of a transverse effort oriented from one end to the other of the reinforcement cross (7).

4. Box following Claim 3, whose reinforcement cross (7) has a substantially straight body (70) and means of attachment (71, 72) at each end of the body (70), the means of attachment (71, 72) being shifted towards the floor (4) in relation to the body (70) of the reinforcement cross (7).

5. Box following one of the preceding claims, the base of which (1) includes a seat cross (53) extending from the first support (51) to the second support (52), connected to one of these ends to the first support (51) between the attachment interfaces (61) located on the first support (51), following the longitudinal direction (X), and its other end to the second bracket (52) between the attachment interfaces (62) on the second bracket (52), following the longitudinal direction (X), with the seat cross (53) attached to the floor (4).

6. Box following one of the preceding claims, with a reinforcement plate (8) on the inner face of the floor (4), fixed to that floor (4), extending at least in part between the supports (51, 52) and in front of the reinforcement rail (7), preferably with a fixing zone (81) for a battery tray (10).

7. Box following Claim 6, whose reinforcement plate (8) has a relief (80) protruding on the opposite side of the floor (4), along the front edge of the said reinforcement plate (8) oriented towards the front of the box, preferably the relief (80) extending in a transverse direction (Y) to the box.

8. Box following one of the preceding claims, the bottom of which (1) has a protective plate (9) positioned opposite the outer face of the floor (4) and attached to the bottom (1), the outer face being the face of the floor opposite the inner face.

9. Box following Claim 8 and one of Claims 6 or 7, whose base (1) includes on the outside side of the box a stretcher extension (11) extending lengthwise on the outside side of the floor (4), and a tunnel reinforcement (12) placed at the junction between the tunnel (2) and the floor (4) so as to reinforce that junction, the protective plate (9) is fixed by one of these edges to the stretcher extension (11) and by a rim opposite the tunnel reinforcement (12), at least in part opposite the reinforcement plate (8).

10. A vehicle with a drum in accordance with one of the previous claims, and a battery pack that is at least partially arranged between the supports (51, 52) and under the reinforcement rail (7).
